Europäisches Patentamt

European Patent Office

Office européen des brevets

(11) Veröffentlichungsnummer: **0 210 507**
**A2**

# (12) EUROPÄISCHE PATENTANMELDUNG

(21) Anmeldenummer: **86109551.1**

(22) Anmeldetag: **11.07.86**

(51) Int. Cl.⁴: **A 23 G 3/30**

(30) Priorität: **24.07.85 CH 3205/85**
**26.05.86 CH 2112/86**

(43) Veröffentlichungstag der Anmeldung:
**04.02.87 Patentblatt 87/6**

(84) Benannte Vertragsstaaten:
**CH FR GB LI**

(71) Anmelder: **L. GIVAUDAN & CIE Société Anonyme**

**CH-1214 Vernier-Genève(CH)**

(72) Erfinder: **Christen, Felix**
**Kreuzwiesen 22**
**CH-8051 Zürich(CH)**

(72) Erfinder: **Kracher, Fritz, Dr.**
**Resigartenstrasse 9**
**CH-8357 Guntershausen(CH)**

(74) Vertreter: **Urech, Peter, Dr. et al,**
**Grenzacherstrasse 124 Postfach 3255**
**CH-4002 Basel(CH)**

(54) **Kaugummi und Verfahren zu seiner Herstellung.**

(57) Die Erfindung betrifft einen neuen Kaugummi, der dadurch gekennzeichnet ist, dass er Biskuit-Textur aufweist.

Der neue Kaugummi ist erhältlich nach einem der üblichen Herstellungsverfahren und daran anschliessender Hitzebehandlung.

EP 0 210 507 A2

Croydon Printing Company Ltd.

L. Givaudan & Cie Société Anonyme, Vernier-Genève (Schweiz)

Ref. 6550/22

## Kaugummi und Verfahren zu seiner Herstellung

Die Erfindung betrifft einen neuartigen Kaugummi, der durch seine Textur, nämlich Biskuit-Textur gekennzeichnet ist.

Unter Biskuit-Textur wird verstanden, dass der Kaugummi das Aussehen von Biskuits (englisch: biscuits, cookies, crackers) hat, also porös, mürbe, brechbar, von blasigem Aussehen ist und meistens eine Art Kruste aufweist, wie diese üblicherweise durch einen Backprozess gebildet wird – und im Inneren eine Unmenge kleiner und kleinster Hohlräume aufweist. Das Aussehen ist also völlig verschieden von den bekanntermassen ziemlich festen und zähen, kompakten Kaumassen der bekannten Kaugummi.

Das Kauen des neuen Kaugummis vermittelt nun zunächst das brüchige, bröckelige Gefühl eines Biskuits, welches Gefühl schon nach wenigen - beispielsweise 10-40 - Sekunden

Ur/16.05.1986

dem üblichen, bekannten Gefühl des Kauens von Kaugummi weichen wird.

Der neuartige Kaugummi erfüllt ein Bedürfnis, das durch die neuen und neuartigen Trends der Essgewohnheiten (sogenannte "Eat-art") klar gegeben ist.

Die Erfindung betrifft auch ein Verfahren zur Herstellung des neuen Kaugummis. Dieses Verfahren ist dadurch gekennzeichnet, dass Kaugummi in üblicher, dem Fachmann bekannter Weise hergestellt wird, dann aber noch zusätzlich einer Hitzebehandlung, also einem Backprozess unterworfen wird.

Unter "in üblicher Weise" wird verstanden, dass zunächst aus den üblichen Ingredienzien eine konventionelle, geschmeidige Kaumasse hergestellt wird.

Die bei der konventionellen Kaugummiherstellung üblichen Ingredienzien sind bekanntlich:

handelsübliche Kaugummibase, also Naturbasen und/oder synthetische Basen,

Süssstoffe, nämlich

1) Zucker oder Zuckeraustauschstoffe, wie Rohrzucker (Saccharose, Sukrose),
Rübenzucker (Saccharose),
Glucose (Traubenzucker),
Fructose (Fruchtzucker);
Puderzucker;
die üblichen Zuckeraustauschstoffe: es sind dies
die in der Branche üblichen Mono- Oligo- und Poly-saccharide, bzw. Derivate solcher Saccharide,
also z.B.:
Maltose (Malzzucker),
Lactose (Milchzucker),
Galactose,
Stärkehydrolysate (Dextrine, Maltodextrine),
Stärkesirup (corn sirup), Maltosesirup, siehe z.B.
Römpps Chemielexikon, 8. Auflage, Band 2 (1981)
Seite 919), H.W. Ockermann, Source Book for Food
Scientists, The AVI Publishing Company Inc.,
(1978), Seite 89 [dextrin(e)...] oder ferner G.G.
Birch, K.J. Parker, Nutritive Sweeteners, Applied
Science Publishers, London and New Jersey, (1982),
Seite 67 ff [Maltose Syrups]),
Polydextrose (Glucose-polymere, mit Sorbit-Endgruppen und mit Citronensäureesterbindungen,
erhältlich durch Schmelzen und Kondensieren von
Glucose, Sorbit und Citronensäure; Pfizer Inc.
Chemical Division 235 E. 42nd St. New York), oder
insbesondere auch Zuckeralkohole, z.B. Sorbit,
Mannit, Xylit, Maltit, etc. Zuckeralkohole sollten
jedoch zweckmässigerweise immer nur im Gemisch mit
Zuckern eingesetzt werden, und zwar mit Vorteil in
Gemischen von ca. 1:1.

2) künstliche Süssstoffe, siehe z.B. Ullmanns Encyklopaedie der technischen Chemie, 4. Auflage, Band 22,
Weinheim, (1982), Seiten 353 seq.

Beispiele von künstlichen Süssstoffen sind insbesondere:

1,2-Benzisothiazol-3(2H)-on-1,1-dioxyd (Saccharin)
1,2-Benzisothiazol-3(2H)-on-1,1-dioxyd (Na-Salz)
Salze der Cyclohexylaminosulfonsäure (Cyclamate),
z.B. das Natrium- oder Calciumsalz

- 4 -

α-L-Aspartyl-L-phenylalanin-methylester (Aspar-
tame(R))

6-Methyl-1,2,3-oxathiazin-4(3H)-on-2,2-dioxyd
Kaliumsalz (Acesulfam-K).

Künstliche Süssstoffe finden insbesondere (auch) dort
Verwendung, wo die Süsskraft von Zucker und/oder Zuckeraustauschstoff als ungenügend empfunden wird. Dies ist z.B. bei
Lactose, Maltodextrinen, etc. der Fall.

Weichmacher, Weichhaltemittel, dick- und dünnflüssige
Paraffine und mikrokristalline Wachse, Glycerin, Emulgatoren, etc.,

Aromastoffe,

gegebenenfalls weitere Hilfsstoffe, z.B. Füllstoffe,
Farbstoffe, Antioxidantien, etc.

Die Gummibase wird durch Vorwärmen, beispielsweise auf
ca. 30°C bis 70°C, erweicht, es werden unter Kneten Süssstoff, Weichmacher, Aromastoffe und gegebenenfalls weitere
Hilfsstoffe zugegeben und unter weiterem Kneten erfolgt in
bekannter Weise die Herstellung der kompakten Kaumasse.

Im bekannten Fall würde nun diese Masse bloss noch mittels der in der Kaugummiindustrie üblichen Vorrichtungen,
also Extruder, Bandformmaschine, Mehrzweckwalze, Schneidewalze, etc. ausgeformt und portioniert, und zwar zu Streifen
(Sticks), Würfeln, Quadern, Riegeln, Zylindern, Hohlkörpern,
Granulaten, etc. Im erfindungsgemässen Fall erfolgt jedoch -
wie oben gesagt - zusätzlich noch eine Hitzebehandlung.

Bzgl. traditioneller Kaugummiherstellung siehe auch

G. Kindel und N.A. Roden, Haarmann & Reimer, Contact (1980), Seiten 30 seq.,

haensel bericht für geschmackstoffe verarbeitende industrien 26, 1 (1981), Seiten 1-19, [Herausgeber: H. Haensel, D-3450 Holzminden],

Zum Erzielen der erfindungsgemässen Struktur ist es besonders vorteilhaft, wenn der neue Kaugummi als Süssstoff(e) entweder

einen wesentlichen, mehrheitlichen oder sogar ausschliesslichen Anteil an praktisch nicht hygroskopischem, oder

einen in Wasser nur mässig löslichem Zucker oder Zuckeraustauschstoff, z.B. ein Maltodextrin, oder Lactose, enthält.

Der Gesamtanteil an diesem Süssstoff beträgt zweckmässigerweise ca. 20 bis 100%, insbesondere ca. 60 bis 100% der Süssstoffmenge.

Unter "praktisch nicht hygroskopisch" und "in Wasser nur mässig löslich" wird verstanden, dass der in Frage kommende Süssstoff nach längerer - beispielsweise 48 stündiger - Lagerung an gewöhnlicher Luft nicht sichtbar zerfliesst oder verklumpt,

bzw. in Wasser bei Raumtemperatur nicht zu mehr als ca. 50% (w/w) löslich ist.

Bevorzugte Süssstoffkombinationen sind:

Lactose / Stärkesirup

Lactose / Stärkesirup / künstlicher Süssstoff

Lactose / künstlicher Süssstoff

Fructose / Maltodextrine

Saccharose / Stärkesirup

Saccharose / Maltodextrine / künstlicher Süssstoff Glucose / Stärkesirup

Galactose / Glucose

Galactose / künstlicher Süssstoff

Maltodextrine / künstlicher Süssstoff.

Es hat sich herausgestellt, dass mit Vorteil Kombinationen von Süssstoffen eingesetzt werden, insbesondere darum, weil auf diese Weise auf Grund der verschiedenen physikalischen und chemischen Eigenschaften der Einzelkomponenten der Kaumasse" massgeschneiderte" Produkte möglich sind; und z.B. auf diese Weise auch der gewünschte Süssigkeitsgrad auf einfache Weise "eingestellt" werden kann.

Als Komponente kommen aus diesem Grund insbesondere die in den Eigenschaften bekanntlich stark variierenden Maltodextrine in Frage.

Die durch Variation der Süssstoffkomponenten und der weiteren Ingredienzien im einzelnen erzielbaren Effekte sind dem Fachmann wohlbekannt.

Die erhaltene kompakte Kaumasse wird hierauf, gegebenenfalls nach bis zu 24 stündiger Lagerung, vorgeformt und portioniert, d.h. im vorliegenden Fall zweckmässigerweise zunächst zu dünnen Schichten (Laminaten) ausgewalzt.

Mit in der Biskuitindustrie üblichen Schneidevorrichtungen bzw. Ausstechmaschinen (Cuttern) kann hierauf portioniert werden, es können also beispielsweise durch Ausschneiden oder Ausstechen die gewünschten Formstücke produziert werden.

Der erfindungsgemässe Backprozess kann in konventionellen Backöfen, oder aber auch im Mikrowellenofen durchgeführt werden.

Der zweckmässige Temperaturbereich beträgt ca. 80°C bis ca. 180°C, insbesondere ca. 90°C bis ca. 150°C.

Der zweckmässige Temperaturbereich ist in einem gewissen Sinn süssstoffspezifisch, indem insbesondere für hygroskopische oder in Wasser gut lösliche Süssstoffe mit Vorteil bei tieferen Temperaturen gearbeitet wird. So sollte denn beispielsweise bei Verwendung von Saccharose und Glucose als Hauptzuckerkomponenten eine Temperatur von ca. 80°C nicht wesentlich überschritten werden. Andererseits sind im Falle von Lactose und Maltodextrin Temperaturen von 150°C gut möglich.

Die Backdauer beträgt zweckmässigerweise ca. 5 bis ca. 50 Minuten, insbesondere ca. 15 bis ca. 30 Minuten. Wie auch oft in der Biskuitindustrie, hängt die geeignete Backdauer insbesondere vom Wassergehalt der Kaumasse ab.

Der Wassergehalt [vor dem Backen ca. 3-3,5%] sollte nach dem Backen nicht wesentlich über 1,0%, sondern vorzugsweise sogar unter 1,0% liegen, um genügende Formstabilität der Formstücke zu gewährleisten. Dieser Unterschied im Wassergehalt ist auch die für die neuartige Textur des erfindungsgemässen Kaugummis wesentliche, nachträglich erkannte Ursache. Konventioneller Kaugummi weist, wie gesagt, üblicherweise einen Wassergehalt von ca. 3-3,5% auf. Durch den Backprozess verdampft das Wasser rasch und führt zur erfindungswesentlichen, porösen Struktur.

Zweckmässige Bereiche für den Mikrowellenofen sind:

Heizleistung:   800 - 1300 Watt
Dauer:          bis zu 10 Minuten

Falls erwünscht, können die Formstücke mit einem Glanzanstrich versehen werden, beispielsweise durch Bestreichen
mit einer 50%igen Gummi-Arabicum-Lösung.

Die Produkte sind beliebig lagerfähig, wobei aber die
Luftfeuchtigkeit nicht zu hoch sein soll.

Es sind zwar Kaugummi mit Lactosegehalt bekannt, siehe
z.B. die japanische Patentpublikation Nr. 34977 (Lotte K.K.;
26. Juli 1982).

Bei diesen bekannten Verfahren wird jedoch die Kaugummigrundmasse zunächst bei viel höherer Temperatur, nämlich bei
100°C - 150°C geknetet und in der Folge Kaugummi mit konventioneller Textur erhalten.

Dasselbe gilt für den Kaugummi der japanischen Patentpublikation Nr. 34 978 (Lotte K.K.; 26. Juli 1982). Der
Gegenstand dieser Publikation unterscheidet sich vom Gegenstand der japanischen Patentpublikation Nr. 34 977 im
wesentlichen dadurch, dass der in der Hitze durchgeführte
Knetprozess mittels Mikrowellenofen erfolgt.

## Beispiel 1

Eine Kaugummimasse besteht aus:

| | |
|---|---|
| Lactose | 54% |
| Stärkesirup 44° Bé (Wassergehalt ca. 15%) | 19% |
| Kaugummibase | 23% |
| Kakaopulver | 2% |
| handelsübliches Schokolade-Aroma | 2% |

Die Kaugummibase wird zunächst in üblicher Weise auf 40°C bis 70°C vorgewärmt und im Mischer werden unter Beibehalten der Temperatur die anderen aufgeführten Ingredienzien in üblicher Weise sorgfältig eingeknetet.

Die fertig gemischte Kaumasse kann (gegebenenfalls nach Lagerung bis zu 24 Stunden bei Raumtemperatur) zu dünnen Schichten (Laminaten) ausgewalzt, aus denen mittels in der Backwarenbranche üblichen Schneidemaschinen ("Cuttern") oder Prägewalzen Formstücke ausgestochen bzw. ausgewalzt werden.

Diese Formstücke werden auf einem Kuchenblech bei 150°C 15 Minuten in einem üblichen Backofen erhitzt. Nach Abkühlen können die Formstücke verpackt werden.

## Beispiel 2

Eine Kaugummimasse besteht aus:

| | |
|---|---|
| Saccharose | 54,5% |
| Stärkesirup 45° Bé | 19,5% |
| Kaugummibase | 24 % |
| handelsübliches Vanille-Aroma | 2 % |

Die Kaugummibase wird auf 40°C bis 70°C vorgewärmt und im Mischer werden unter Beibehalten der Temperatur die anderen aufgeführten Ingredienzien in üblicher Weise sorgfältig eingeknetet. Die fertig gemischte Kaumasse kann (gegebenenfalls nach Lagerung bis zu 24 Stunden bei Raumtemperatur) zu dünnen Schichten (Laminaten) ausgewalzt, aus denen mittels rotierenden Schneidemaschinen (rotary cutter) Formstücke ausgestochen werden.

Diese Formstücke werden auf einem Backblech bei 80°C 30 Minuten in einem üblichen Backofen erhitzt. Nach Abkühlen können die Formstücke verpackt werden.

## Beispiel 3

Eine Kaumasse besteht aus:

| | |
|---|---|
| Glucose, wasserfrei | 54,4% |
| Stärkesirup 44° Bé | 19,5% |
| Kaugummibase | 24 % |
| handelsübliches Orangen-Aroma | 2,1% |

Die Kaugummibase wird auf 40°C bis 70°C vorgewärmt und im Mischer werden unter Beibehalten der Temperatur die anderen aufgeführten Ingredienzien in üblicher Weise sorgfältig eingeknetet.

Die fertig gemischte Kaumasse kann (gegebenenfalls nach Lagerung bis zu 24 Stunden bei Raumtemperatur) zu dünnen Schichten (Laminaten) ausgewalzt, aus denen Formstücke ausgestochen werden.

Diese Formstücke werden 4 Minuten in einem 800 W-Mikrowellenofen behandelt. Nach Abkühlen können die Formstücke verpackt werden.

## Beispiel 4

Nach dem Verfahren der Beispiele 1 bis 3 führen auch die Kaugummimassen folgender Zusammensetzung nach dem Backprozess zu ähnlichen Ergebnissen:

| | | | |
|---|---|---|---|
| a) | Maltose | 66 | % |
| | Saccharin | 0,2 | % |
| | Wasser | 3 | % |
| | Glycerin | 5 | % |
| | Base | 24 | % |
| | Aroma | 1,8 | % |
| b) | Lactose | 66 | % |
| | Aspartame | 0,4 | % |
| | Wasser | 3 | % |
| | Glycerin | 5 | % |
| | Base | 24 | % |
| | Aroma | 1,6 | % |
| c) | Saccharose | 66 | % |
| | Aspartame | 0,3 | % |
| | Wasser | 3 | % |
| | Glycerin | 5 | % |
| | Base | 24 | % |
| | Aroma | 1,7 | % |
| d) | Galactose | 66 | % |
| | Saccharin | 0,15 | % |
| | Wasser | 3 | % |
| | Glycerin | 5 | % |
| | Base | 24 | % |
| | Aroma | 1,85 | % |

e) Maltodextrin (niedrig verzuckert)    66 %
   Acesulfam-K                          0,4%
   Wasser                               3 %
   Glycerin                             5 %
   Base                                 24 %
   Aroma                                1,6%

f) Maltodextrin (hoch verzuckert)      67 %
   Wasser                               3 %
   Glycerin                             5 %
   Base                                 23 %
   Aroma                                2 %

Patentansprüche

1. Kaugummi, dadurch gekennzeichnet, dass er Biskuit--Textur aufweist.

2. Kaugummi nach Anspruch 1, erhältlich nach einem der üblichen Herstellungsverfahren und daran anschliessender Hitzebehandlung.

3. Kaugummi nach Anspruch 1 oder 2, dadurch gekennzeichnet, dass die Hitzebehandlung Temperaturen von 80°C bis 180°C, insbesondere 90°C bis 150°C umfasst.

4. Kaugummi nach einem der Ansprüche 1 bis 3, dadurch gekennzeichnet, dass die Hitzebehandlung 5 bis 50 Minuten, insbesondere 15 bis 30 Minuten dauert.

5. Kaugummi nach einem der Ansprüche 1 bis 4, dadurch gekennzeichnet, dass die Hitzebehandlung in einem konventionellen Ofen durchgeführt wird.

6. Kaugummi nach einem der Ansprüche 1 bis 4, dadurch gekennzeichnet, dass die Hitzebehandlung in einem Mikrowellenofen durchgeführt wird.

7. Kaugummi nach einem der Ansprüche 1 bis 6, dadurch gekennzeichnet, dass er als Süssstoff im wesentlichen, mehrheitlich oder sogar ausschliesslich entweder einen praktisch nicht hygroskopischen Süssstoff oder einen in Wasser nur mässig löslichen Süssstoff oder eine Kombination solcher Süssstoff enthält.

8. Kaugummi nach Anspruch 7, dadurch gekennzeichnet, dass der Süssstoff Lactose ist.

9. Kaugummi nach Anspruch 7, dadurch gekennzeichnet, dass der Süssstoff Galactose ist.

10. Kaugummi nach Anspruch 7, dadurch gekennzeichnet, dass er einen künstlichen Süssstoff oder eine Kombination künstlicher Süssstoffe enthält.

11. Kaugummi nach Anspruch 10, dadurch gekennzeichnet, dass als künstlicher Süssstoff Saccharin oder ein Salz davon, ein Cyclamat, Aspartame oder Acesulfam-K verwendet wird.

12. Verfahren zur Herstellung eines Kaugummis mit Biskuit-Textur, dadurch gekennzeichnet, dass man ihn nach dem üblichen Herstellungsverfahren einer Hitzebehandlung unterwirft.

13. Verfahren nach Anspruch 12, dadurch gekennzeichnet, dass die Hitzebehandlung einen Temperaturbereich von 80°C bis 180°C, insbesondere von 90°C bis 150°C umfasst.

14. Verfahren nach Anspruch 12 oder 13, dadurch gekennzeichnet, dass die Hitzebehandlung 5 bis 50 Minuten, insbesondere 15 bis 30 Minuten dauert.

15. Verfahren nach einem der Ansprüche 12 - 14, dadurch gekennzeichnet, dass die Hitzebehandlung in einem konventionellen Ofen durchgeführt wird.

16. Verfahren nach einem der Ansprüche 12 - 14, dadurch gekennzeichnet, dass die Hitzebehandlung in einem Mikrowellenofen durchgeführt wird.

17. Verfahren nach einem der Ansprüche 12 - 16, dadurch gekennzeichnet, dass bei der Herstellung als Süssstoff mehrheitlich oder sogar ausschliesslich entweder ein praktisch nicht hygroskopischer Süssstoff oder ein in Wasser nur mässig löslicher Süssstoff oder eine Kombination solcher Süssstoffe verwendet wird.

18. Verfahren nach Anspruch 17, dadurch gekennzeichnet, dass der Süssstoff Lactose ist.

19. Verfahren nach Anspruch 17, dadurch gekennzeichnet, dass der Süssstoff Galactose ist.

20. Verfahren nach einem der Ansprüche 12 bis 19, dadurch gekennzeichnet, dass der Kaugummi einen künstlichen Süssstoff oder eine Kombination künstlicher Süssstoffe enthält.

*  *  *